# EUROPÄISCHE PATENTSCHRIFT

(11) **EP 3 898 535 B1**
(45) Veröffentlichungstag und Bekanntmachung des Hinweises auf die Patenterteilung: **21.12.2022**
(21) Anmeldenummer: 19835582.8
(22) Anmeldetag: 17.12.2019
(51) Int. Cl.: C03B 19/10, C03C 1/00, B09B 3/00, F27D 27/00, C04B 18/14, C21B 3/08, B09B 3/29, B09B 3/40, B09B 5/00

(54) **VERFAHREN ZUM VERARBEITEN VON SCHMELZFLÜSSIGEM MATERIAL**
METHOD FOR PROCESSING MOLTEN MATERIAL
PROCÉDÉ DE TRAITEMENT D'UN MATÉRIAU FONDU

(30) Priorität: 18.12.2018 AT 3772018
(43) Veröffentlichungstag der Anmeldung: 27.10.2021
(73) Patentinhaber: Radmat AG, 5442 Fislisbach (CH)
(72) Erfinder: EDLINGER, Alfred, 6781 Bartholomäberg (AT)
(74) Vertreter: Keschmann, Marc
(86) Internationale Anmeldenummer: PCT/AT2019/000034
(87) Internationale Veröffentlichungsnummer: WO 2020/124105

(56) Entgegenhaltungen:
- CN-A- 104 962 670
- JP-A- H06 305 739

## Beschreibung

Die Erfindung betrifft ein Verfahren zum Verarbeiten von schmelzflüssigem Material in Form von nichtmetallischer Schmelze wie Schlacke, zu amorphem Material, bei welchem das schmelzflüssige Material durch Kühlen verglast wird, wobei das schmelzflüssige Material zum Verglasen mit einem Metallbad in Kontakt gebracht und anschließend als amorphes Material aus dem Metallbad ausgebracht wird, sowie eine Vorrichtung zur Durchführung dieses Verfahrens.

Mineralische Schmelzen, wie beispielsweise Hochofenschlacken und synthetische Mergelschlacken, werden üblicherweise mit Hilfe von Wasser durch Kühlen verglast, um ein amorphes Produkt zu erhalten, welches in der Glasphase, d.h. einer metastabilen Phase erstarrt ist. Nach einem Mahlvorgang kann ein derartiges Produkt verschiedenen Zementen als latent hydraulisch aktive Komponente zugemischt werden. Die Wärme der Schmelze wird bei einer derartigen Verfahrensweise in Niedertemperaturwärme von Wasser übergeführt und ist nicht weiter nutzbar.

Für die Zwecke der vorliegenden Erfindung umfasst der Begriff "nichtmetallische Schmelzen" mineralische Schmelzen, Hochofenschlacke, Stahlschlacke gegebenenfalls versetzt mit SiO₂ zur Basizitätsabsenkung, künstliche Schlacken aus Mergel, Zementofen-Bypass-Stäube, Müllverbrennungsschlacke, nichteisenmetallurgische Schlacken, Schmelzkammerschlacken aus kalorischen Kraftwerken, Kupolofenschlacken, Tonerdeschmelzzementschmelzen, Altglasschmelzen, künstliche Puzzolanschmelzen, industrielle Staubschmelzen, wie beispielsweise Schlackenschmelzen aus getrocknetem Klärschlamm und dergleichen. Weiters sind Glas- und Keramikschmelzen ein geeignetes Ausgangsmaterial und das Verfahren kann zur Herstellung von Mikrogranulat aus Glas- oder Keramikkugeln ausgeführt werden.

Mineralische Schmelzen, beispielsweise Klärschlammschlacken, müssen extrem rasch (etwa mit 10³K/sec) unter deren Rekristallisationspunkt (je nach Basizität zwischen etwa 600 und 850°C) gekühlt werden, um ein zementgängiges amorphes und hydraulisch aktives Produkt zu erhalten. Unter dieser Rekristallisationstemperatur kann in der Folge mit einem wesentlich geringeren Kühlgradienten das Auslangen gefunden werden.

Um den Schlackenglas-Gehalt des Granulats amorphen Materials bzw. amorphen Granulats zu erhöhen und die Schlackenmahlbarkeit gegenüber einer Kaltwassergranulation zu verbessern, ist in der WO 01/051674 A1 eine Siedewassergranulation vorgeschlagen worden, bei der die schmelzflüssige Schlacke in mit Siedetemperatur vorgelegtes Kühlwasser eingebracht wird. Dadurch steht die latente Verdampfungsenthalpie des Kühlwassers zur rascheren Abkühlung unmittelbar zur Verfügung, wodurch der Schlackenglas-Gehalt maximiert wird. Das Granulat hat überraschender Weise eine sehr geringe scheinbare Dichte und schwimmt auf dem siedenden Wasser auf. Dies bedeutet, dass die Schlackenmahlbarkeit gegenüber der Mahlbarkeit bei Verwendung der Kaltwassergranulation wesentlich verbessert wird. Das Granulat selbst wird mit einer die Siedetemperatur des Wassers übersteigenden Temperatur aus dem siedenden Wasser ausgetragen, wobei das Haftwasser während des Granulataustrages abdampft, sodass unmittelbar trockenes Granulat entsteht. Da Wasser gemeinsam mit dem Granulat lediglich in Dampfform ausgetragen wird, besteht auch kein Abwasserproblem. Der Dampf wird kondensiert und gemeinsam mit Zusatzwasser zur Deckung der Wasserdampfverluste dem Granulator rückgeführt. Die bei der Schlacke-Wasser-Reaktion entstehenden Nebenprodukte, wie z.B. H₂S verbleiben bei der Kondensation des Wassers in der Gasphase und liegen hier in konzentrierter Form vor, sodass eine wirtschaftlich sinnvolle Aufarbeitung gelingt. Andererseits erfordert die Bildung einer chemisch hochbelasteten Dampfphase die Bereitstellung aufwändiger Installationen, um die Dämpfe angemessen behandeln zu können.

Aus der WO 2016/145466 A1 ist ein Verfahren bekannt geworden, bei welchem die Kühlwassergranulation dahingehend weiterentwickelt wurde, dass dem Kühlwasser zur Abtrennung und/oder Umwandlung von Störstoffen, beispielsweise Fluor- und Chlorverbindungen, Alkalien, Schwefel, Schwermetalle (z.B. Cr, V, Ni, Mo, Cu, Sn, Zn, Cd, Hg), seltene Erden, aber auch Eisen und Freikalk bzw. unreagiertes CaO sowie MgO, eine Säure und insbesondere Schwefelsäure zugesetzt wird. Das hierbei erhaltene Granulat weist eine besonders hohe Reaktivität und hydraulische Aktivität auf und kann daher mit großem Nutzen in der Zementindustrie Verwendung finden.

Das Verfahren gemäß der WO 2016/145466 A1 ist jedoch insofern verbesserungswürdig, als einerseits die Kühlwirkung des wässrigen Kühlmediums aufgrund des Leidenfrost-Effekts als unzufriedenstellend angesehen werden kann und andererseits die bei der Granulation entstehenden Dämpfe nicht nur giftig sondern auch in höchstem Maße korrosiv sind. Dies geht mit erhöhten Anforderungen an das Abluftmanagement hinsichtlich umweltrelevanter Aspekte und hinsichtlich der Arbeitssicherheit einher.

Beispielsweise in der JP 2014065671 A ist ein Verfahren zum Kühlen von flüssiger Schlacke offenbart, bei dem die Schmelze auf ein Metallbad aufgebracht wird, um sie möglichst rasch auf der Oberfläche des Metallbads zu einer Platte zu verglasen. Ähnliches ist in CN 105837041 A offenbart, wo eine Glasschmelze in einem Zinntank gekühlt wird, um eine amorphe Glasplatte zu bilden. Allen Lösungen dieser Art stehen in der Realisierung verfahrenstechnische Aspekte entgegen, die diese untauglich erscheinen lassen.

In den Patentdokumenten DE 3220624 A1, DE 2244038 A1, WO 0014285 A1, US 5305990 A und CN 105837041 A ist der allgemeine Stand der Technik zum Gebiet der Erfindung beschrieben.

JPH06305739 beschreibt ein Verfahren zur Verarbeitung von schmelzflüssigem Glas, bei welchem die Glasschmelze auf ein geschmolzenes Metallbad aufgebracht wird, wobei das Metallbad gerührt wird. Nach Abkühlung erhält man sphärische Glaskörper. CN104962670 A lehrt ein Verfahren und eine entsprechende Anlage zur Granulierung von flüssiger Schlacke, wobei die Schlacke in einen Behälter, gefüllt mit geschmolzenem Metall, geführt wird und das Metall gerührt wird.

Der Erfindung liegt daher die Aufgabe zugrunde, ein Verfahren der eingangs genannten Art dahingehend zu verbessern, dass einerseits eine möglichst rasche Kühlung erfolgt, um ein hochgradig amorphes Produkt für die Verwendung in der Zementindustrie zu erhalten, ohne dass chemisch belastete Dämpfe und insbesondere keine korrosiven Dämpfen entstehen, und andererseits ein möglichst stabiler, kontinuierlicher Betrieb des Verfahrens ermöglicht wird.

Zur Lösung dieser Aufgabe ist ein Verfahren der eingangs genannten Art erfindungsgemäß dadurch gekennzeichnet, dass das schmelzflüssige Material über ein offenes Ende eines in das Metallbad eintauchenden Tauchrohrs in das Metallbad eingebracht wird und im Metallbad, bevorzugt mittels eines mechanischen Desintegrators, bevorzugt Rotors, aus dem Bereich des offenen Endes des Tauchrohrs gefördert wird.

Das Vorsehen eines Metallbads zum Kühlen der Schmelzen hat gegenüber der Verwendung wässriger Kühlmedien den Vorteil, dass bei den bei der Verarbeitung von Schmelzen wie Hochofenschlacke üblichen Temperaturen keine Verdampfung des Kühlmediums auftritt. Dies hat im Vergleich zur Verwendung von wässrigen Kühlmedien, die an der Oberfläche des schnell zu kühlenden Materials in die Dampfphase übergehen (Leidenfrost-Effekt), einen weitaus besseren Wärmeübergang von der Schmelze in das Metall als Kühlmedium zur Folge, sodass eine überaus rasche Kühlung unter den Rekristallisationspunkt der Schmelze erfolgt. Die Verwendung von Metall als Kühlmedium zeichnet sich dadurch aus, dass keine oder keine nennenswerte Dampfentwicklung zu beobachten und das erfindungsgemäße Verfahren daher einfach zu handhaben und mit geringem anlagentechnischen Aufwand zu realisieren ist. Die Erfindung stellt sich auch insofern als besonders vorteilhaft dar, als bei dem erfindungsgemäßen, wasserfreien Verglasungs- und Granulierverfahren keine Gefahr von Wasserdampfexplosionen besteht. Dadurch, dass die Schmelze mittels eines Tauchrohrs in die Tiefe des Metallbads eingebracht und aus dem Bereich des offenen Endes des Tauchrohrs, das heißt aus dem Eintragsbereich gefördert, das heißt entfernt wird, wobei dies bevorzugt im Sinne einer Zwangsförderung und weiters bevorzugt mittels eines mechanischen Desintegrators erfolgt, wird ein überaus feinteiliges amorphes Material als Produkt erhalten. In der Tiefe des Metallbads herrschen aufgrund der Förderarbeit, die zum Fördern der amorph erstarrten Schmelzen in das Bad eingebracht wird, starke, mitunter turbulente Strömungsverhältnisse, sodass die Schmelze starken Scherkräften ausgesetzt wird. Dies führt zu einer starken Zerkleinerung der eingebrachten Schmelze, die durch die bevorzugt mechanisch erfolgende Förderung des amorphen Materials aus dem Bereich des offenen Endes des Tauchrohrs noch weiter vorangetrieben werden kann. Die im Metallbad rasch abkühlende Schmelze kann aufgrund der Förderwirkung nicht mehr in den Bereich des offenen Endes des Tauchrohrs gelangen, wodurch nachfließende Schmelze konstant in das Metallbad eingebracht werden kann. Das aus der Schmelze gebildete amorphe Material wird in der Folge, aufgrund der bereits erwähnten geringen Dichte der auf diese Weise gekühlten und dadurch zu amorphem Material granulierten Schmelze, neben dem Tauchrohr durch das Metallbad zur Oberfläche steigen und sich dort ansammeln. Mit ständig nachfließender Schmelze wird sich das amorphe Material an der Oberfläche immer weiter ansammeln und durch aus dem Metallbad nachsteigendes amorphes Material aufgeschichtet und kann schließlich ausgetragen werden.

Zur Einbringung von Scherkräften auf das in das Metallbad eingebrachte schmelzflüssige Material, ist bevorzugt vorgesehen, dass das schmelzflüssige Material zumindest teilweise mittels eines über eine Lanze in das Metallbad eingebrachten Gasstroms aus dem Bereich des offenen Endes des Tauchrohrs gefördert wird.

Bevorzugt erfolgt das Zerteilen des schmelzflüssigen Materials durch die kombinierte Wirkung des eingebrachten Gasstroms und der mechanischen Förderung bzw. Desintegration des schmelzflüssigen Materials, wobei die mechanische Förderung wie erwähnt bevorzugt durch einen mechanischen Desintegrator erfolgt.

Gemäß einer bevorzugten Ausführungsform der vorliegenden Erfindung wird das erfindungsgemäße Verfahren dahingehend weitergebildet, dass das schmelzflüssige Material zumindest teilweise mittels eines Gasstroms aus einer im Inneren des Tauchrohrs geführten und in das Metallbad eintauchenden Lanze aus dem Bereich des offenen Endes des Tauchrohrs gefördert wird, wobei bevorzugt im Metallbad im Bereich der Mündung der Lanze Führungseinbauten zur Lenkung einer Strömung angeordnet sind. Aus der Lanze kann ein Gasstrom aus Inertgasen wie Stickstoff, CO₂ oder Ar und/oder aus reaktiven Gasen wie H₂, NH₃ oder CO in den Bereich des offenen Endes und in die oberste Schicht des Metallbades sowie durch die Führungseinbauten ausgestoßen werden, um durch den entstehenden Sog das schmelzflüssige Material in das Metallbad zu fördern und gleichzeitig hohen Scherkräften zur Zerkleinerung auszusetzen. Durch die entstehende Strömung wird das gebildete amorphe Material bzw. Granulat aus dem Bereich des offenen Endes des Tauchrohrs gefördert.

Gemäß einer weiters bevorzugten Ausführungsform der vorliegenden Erfindung wird das erfindungsgemäße Verfahren dahingehend weitergebildet, dass das schmelzflüssige Material zumindest teilweise mittels eines Gasstroms, der aus einer aus dem Metallbad zum offenen Ende des in das Metallbad eintauchenden Tauchrohrs gerichteten Lanze kommt, aus dem Bereich des offenen Endes des Tauchrohrs gefördert wird, wobei bevorzugt im Metallbad im Bereich der Mündung der Lanze Führungseinbauten zur Lenkung einer Strömung angeordnet sind. Aus der Lanze kann ein Gasstrom aus Inertgasen wie Stickstoff, CO₂ oder Ar und/oder aus reaktiven Gasen wie H₂, NH₃ oder CO durch die Führungseinbauten in den Bereich des offenen Endes und in die oberste Schicht des Metallbades ausgestoßen werden, um durch den entstehenden Sog das schmelzflüssige Material in das Metallbad zu fördern und gleichzeitig hohen Scherkräften zur Zerkleinerung auszusetzen. Durch die entstehende Strömung wird das gebildete amorphe Material bzw. Granulat aus dem Bereich des offenen Endes des Tauchrohrs gefördert.

Gemäß einer bevorzugten Ausführungsform der vorliegenden Erfindung ist es vorgesehen, dass das schmelzflüssige Material einem dem Metallbad vorgeschalteten Reaktiv-Metallbad, bevorzugt Reaktiv-Zinnbad, aufgegeben wird, wobei das Reaktiv-Metallbad durch Zugabe von Reaktivkomponenten ausgewählt aus der Gruppe bestehend aus Kalkträgern und SiO₂-Trägern zur Einstellung der Basizität (CaO/SiO₂) des schmelzflüssigen Materials auf eine Zielbasizität von 0,85 bis 1,6, bevorzugt 1,3 bis 1,6, bereitet wird. Die Anpassung der Basizität, dem Verhältnis von CaO zu SiO₂, in dem schmelzflüssigen Material, wie beispielsweise der Eduktschlackenschmelze, ist für die Viskosität und damit für das Zerteilungsverhalten des in das für die Kühlung bzw. Verglasung vorgesehenen Metallbads schmelzflüssigen Materials von größter Bedeutung, da beispielsweise bei Basizitäten von ungefähr 1,9 Schlackenschmelze hochviskos wird und im Metallbad praktisch nicht mehr granulierbar ist. Im Falle von Schlackenschmelzen liegen die Ausgangsbasizitäten mitunter im Bereich von 3, sodass eine Ansäuerung des schmelzflüssigen Materials mit SiO₂-Trägern, notwendig ist. Ausgehend von der Art des schmelzflüssigen Materials und dessen Basizität kann jedoch auch eine Anhebung der Basizität durch Zugabe von CaO-Trägern, d.h. Kalkträgern vorgesehen sein. Bei der bevorzugten Einstellung der Basizität auf Werte von 1,3 bis 1,6 kommt es zur Ausscheidung von Belitkörnern in der Schlackenschmelze, was nach dem Schritt der Kühlung durch Verglasung die Eignung des Endprodukts für die Zementindustrie aufgrund einer hohen hydraulischen Aktivität deutlich verbessert. Bei der Aufarbeitung hochproblematischer Altfasermatten und -stoffe kann das Reaktiv-Metallbad als Vorschmelzaggregat dienen. Das gegebenenfalls beheizte Reaktiv-Metallbad kann neben der Einstellung der Basizität des schmelzflüssigen Materials auch sehr bedeutsam für die Einstellung der Temperatur und damit der Viskosität des schmelzflüssigen Materials sein.

Die vorliegende Erfindung kann weiters mit Vorteil dahingehend weitergebildet werden, dass das Reaktiv-Metallbad durch Zugabe von Al₂O₃-Trägern zur Einstellung eines Al₂O₃-Gehalts im schmelzflüssigen Material von 4 Gew.-% bis 18 Gew.-% bereitet wird.

Gemäß einer bevorzugten Ausführungsform der vorliegenden Erfindung wird das schmelzflüssige Material durch die Wirkung eines mechanischen Desintegrators in das Metallbad hineingedrückt. Dies bedeutet, dass der mechanische Desintegrator, der wie bereits erwähnt bevorzugt als Rotor ausgebildet sein kann, bevorzugt dergestalt ausgelegt ist, dass im Betrieb des Desintegrators eine Art Wirbel entsteht, der in Richtung der Tiefe des Metallbads gerichtet ist und der die am offenen Ende des Tauchrohrs auf das Metallbad treffende Schmelze bzw. schmelzflüssige Schlacke in das Metallbad hineindrückt. Auf diese Weise werden sehr hohe Scherkräfte auf die zu kühlende Schmelze aufgebracht, was zu einer überaus wirkungsvollen Zerkleinerung der Schmelze führt. Dies fördert eine rasche Abkühlung, was wiederum zur Förderung der Bildung einer beinahe vollständig amorphen Struktur und einer geringen Dichte des Produkts führt. Mit dem erfindungsgemäßen Verfahren kann somit in vorteilhafter Weise ein kugelförmiges Granulat erhalten werden, dass aufgrund seiner feinteiligen Größenverteilung bereits ohne die Notwendigkeit eines Mahlschrittes in der Zementindustrie Verwendung finden kann. Die Bildung von kugelförmigem Granulat erklärt sich aus der großen Differenz von Viskosität und Oberflächenspannung zwischen dem eingebrachten schmelzflüssigen Material und dem Metallbad, insbesondere der Zinnbadschmelze. Das eingebrachte schmelzflüssige Material hat im Falle von Schlackenschmelze eine vergleichsweise niedrige Oberflächenspannung und eine hohe Viskosität verglichen mit der relativ hohen Oberflächenspannung und der geringen Viskosität des Metallbads, insbesondere der Zinnschmelze. Ab einem bevorzugten Verhältnis von Schlacke:Metallbad, insbesondere Schlacke:Zinn, von 1:3,4 umhüllt das Metallbad die Schlackenschmelze und es bildet sich eine Dispersion von Schlacketröpfchen in dem Metallbad, wobei das Metallbad von der Schlackenschmelze jedoch nicht benetzt wird. Aufgrund der eingebrachten Scherkräfte wird die Schlackenschmelze im Metallbad weiter dispergiert und die Schlackenschmelze aufgrund der unterschiedlichen Oberflächenspannungen zu mikrokugelförmiger Gestalt geformt. Hierbei gilt, dass der Schlackenkugeldurchmesser umso kleiner wird, je höher die Temperatur des Metallbads ist und je bedeutender die eingebrachten Scherkräfte sind.

Für den Einsatz als Kühlmedium für die Schmelze eignet sich eine Reihe von Metallen, wobei allgemein Metalle mit niedrigem Schmelzpunkt und hohem Siedepunkt günstig für die Verwendung im Rahmen der vorliegenden Erfindung sind. Ein niedriger Schmelzpunkt gestattet es, ein im Vergleich zu den eingebrachten Schmelzen sehr kühles Metallbad zur Verfügung zu stellen und ein hoher Siedepunkt verhindert Verdampfungsverluste aus dem Metallbad und damit einhergehend die Entwicklung von gesundheits- und umweltschädlichen Dämpfen. Unter diesem Aspekt ist das Verfahren gemäß der vorliegenden Erfindung bevorzugt dahingehend weitergebildet, dass das Metallbad aus Zinn, bevorzugt zu 3 Gew.-% mit Silber und zu einem 1 Gew.-% mit Kupfer legiert, gebildet wird. Zinn weist einen Schmelzpunkt von 231,93°C auf und der Siedepunkt liegt bei 2620°C, weswegen ein breiter Temperaturbereich für die Kühlung von beispielsweise Schlacke ohne die Gefahr der Verdampfung des Metalls genutzt werden kann. Die nichtmetallischen Schmelzen, die im Rahmen der vorliegenden Erfindung zu amorphem Granulat verarbeitet werden, werden bevorzugt mit ungefähr 1350°C bis 1850°C eingebracht, sodass eine Temperaturdifferenz von etwa 1200°C für die rasche Kühlung der Schmelze zu amorphem Material zur Verfügung steht. Wenn das Zinnbad weiters mit Silber und Kupfer legiert ist, kann der Schmelzpunkt sogar auf bis zu 219°C gesenkt werden und die Oxidationsaktivität des Metallbades wird vermindert.

Gemäß einer bevorzugten Ausführungsform der vorliegenden Erfindung ist das Verfahren dahingehend weitergebildet, dass das Metallbad bei einer unterhalb der Rekristallisationstemperatur des schmelzflüssigen Materials liegenden Temperatur, insbesondere bei einer Temperatur von zwischen 300°C und 600°C vorgehalten wird, in welchem Temperaturbereich auch bei unregelmäßiger Einbringung von schmelzflüssigem Material weder ein Erstarren des Metallbades zu befürchten ist, noch eine für eine ausreichende rasche Kühlung nachteilig hohe Temperatur des Kühlmediums Zinn in Kauf genommen werden muss.

Die Temperatur des Metallbads kann unter gewissen Umständen lediglich durch die Wärme des eingebrachten schmelzflüssigen Materials aufrechterhalten werden. Um jedoch die Eignung des erfindungsgemäßen Verfahrens für die Verarbeitung von großen Mengen an Schmelzen anzupassen, kann die durch das schmelzflüssige Material in das Metallbad eingebrachte Wärme mittels eines durch einen Wärmetauscher strömenden Kühlmittels abgeführt werden, wie dies einer bevorzugten Ausführungsform der vorliegenden Erfindung entspricht. Wenn also große Mengen von Schmelze bzw. Schlacke und damit einhergehend große Wärmemengen in das Metallbad eingebracht werden und deshalb die Temperatur des Metallbads derart ansteigt, dass ein ausreichend rasches Abkühlen der Schmelze zum Verglasen bzw. Granulieren des Materials nicht gewährleistet werden könnte, gestattet es das Kühlmittel im Wärmetauscher, die mit der Schmelze eingebrachte Wärme abzuführen und somit das Metallbad bei den gewünschten Temperaturen zu halten.

Bevorzugt wird das Kühlmittel aus der Gruppe bestehend aus flüssigem Sauerstoff, Luft, Inertgas, Thermalöl, Wasser sowie ionischen Flüssigkeiten, insbesondere wässrigen Lösungen von Natrium-, Magnesium- und Calciumchlorid sowie Kaliumcarbonat gewählt. Diese Kühlmittel sind für die im Rahmen der vorliegenden Erfindung relevanten Temperaturbereiche geeignet und können mit im Stand der Technik bekannten Anlagen zirkuliert und thermisch gesteuert werden. Im Falle von flüssigem Sauerstoff als Kühlmittel kann das Verfahren zum Ersatz von teuren Sauerstoff-Verdampfungsanlagen nutzbringend eingesetzt werden. Der so erhitzte Sauerstoff kann bevorzugt zum Antrieb einer Sauerstoff-Gasturbine zur Energiegewinnung eingesetzt werden, wobei das Sauerstoffgas bevorzugt auf ein Druckniveau entspannt wird, dass zur Verbrennung des restheißen Sauerstoffs in einem Oxifuel-Brenner nötig ist.

In diesem Zusammenhang ist es besonders vorteilhaft, wenn die Wärme des Kühlmittels als mechanische und/oder elektrische Energie rückgewonnen wird, insbesondere in einer Gasturbine oder einem Druckwasserwärmetauscher mit Kraft-Wärme-Kopplung. Im Gegensatz zum oben beschriebenen Stand der Technik gestattet es das erfindungsgemäße Verfahren, die Wärme des schmelzflüssigen Materials, beispielsweise der in das Metallbad eingebrachten schmelzflüssigen Klärschlammschlacke, mit dem Kühlmedium zu extrahieren und in der Folge nutzbar zu machen. Die Rückgewinnung der Wärme gestattet den gesamten mechanischen Betrieb des erfindungsgemäßen Verfahrens. Hierzu haben Versuche gezeigt, dass der mechanische Energiebedarf ungefähr bei 15 - 35 kWh/t Granulat (des amorphen Materials) liegt, was ohne Weiteres aus der rückgewonnenen Enthalpie des eingebrachten schmelzflüssigen Materials erhalten werden kann. Die Wärmemengen, die beispielsweise in Hochofen- oder Klärschlammschlacke enthalten sind, sind bedeutend und fallen insbesondere auf exergetisch hohem Niveau an, sodass sie in einer Vielzahl von Prozessen genützt werden können.

So kann beispielsweise die Wärme des Kühlmittels zur Begünstigung endothermer chemischer Reaktionen eingesetzt werden, wie dies einer anderen bevorzugten Ausführungsform der vorliegenden Erfindung entspricht. Besonders bevorzugt wird die Wärme des Kühlmittels hierbei zur Depolymerisation von Alt-Kunststofffraktionen, insbesondere von Polyethylen, Polypropylen und Polyethylenterephthalat eingesetzt. Hierbei entstehen aus den Polymeren und insbesondere aus den Polymeren der genannten Thermoplaste Mono- und Oligomere, insbesondere ungesättigte Oligomere, die in der Folge in der synthetischen Chemie zur Herstellung von neuen Kunststoffen verwendbar sind. Das erfindungsgemäße Verfahren kann daher nutzbringend mit von der Stahlindustrie, oder der Zementindustrie unterschiedlichen Entsorgungsprozessen, beispielsweise in der Müllentsorgung verknüpft werden. Dieselben endothermen Reaktionen können auch dergestalt begünstigt werden, dass die genannten Stoffe wie Alt-Kunststofffraktionen, insbesondere Polyethylen, Polypropylen und Polyethylenterephthalat direkt in das Metallbad eingebracht werden, wodurch das Metallbad ebenfalls effektiv gekühlt wird. Zu diesem Zweck kann es bevorzugt vorgesehen sein, das Zinnbad durch Legieren mit Ag, Cu, Pt, Co, Ni, Ru, Rh und/oder Pd mit besonderen katalytischen Eigenschaften zur Steuerung/Optimierung der erwähnten endothermen Reaktionen wie Depolymerisation/Cracken, Hydrierung, Carbonylierung, zu versehen. Durch die Zugabe von NH₃ zum Zinnbad können auf diese Weise Alt - Carbonfasern in wertvolle chemische Zwischenprodukte, z.B. Acrylnitril umgesetzt werden. Diese Art der chemischen Kühlung kann alternativ oder zusätzlich zu der genannten physikalischen Kühlung durch einen Wärmetauscher mit einem Kühlmittel erfolgen.

Zum Austragen des amorphen Materials kann das Verfahren bevorzugt dahingehend weitergebildet sein, dass das amorphe Material mithilfe eines Fördermittels ausgewählt aus der Gruppe bestehend aus Förderband und Förderrad ausgebracht wird. Mit dem Förderrad wird das Material von der Oberfläche des Metallbads über einen Rand oder aus einem Austragsbereich der Granuliergießwanne, in dem das Metallbad vorgehalten wird, gefördert und fällt danach in der Regel in einen hier nicht näher beschrieben Behälter oder eine Rohrleitung und kann weiterbearbeitet oder abgelagert werden.

Gemäß einer bevorzugten Ausführungsform der vorliegenden Erfindung wird das Metallbad mit einem Inertgas, insbesondere Stickstoff gespült. Dies führt zum Einen dazu, dass das Metallbad dadurch, dass das Inertgas den Luftsauerstoff von der Oberfläche des Metallbads verdrängt, die Haltbarkeit des Metallbads verlängert wird und zum Anderen zu einer Auflockerung des an der Oberfläche des Metallbads schwimmenden amorphen Materials, sodass eventuell an Partikeln des amorphen Materials anhaftendes Zinn besser ablaufen kann. Im Allgemeinen kann somit auf eine spezielle Filtrierung des amorphen Materials bei oder nach der Entnahme aus dem Metallbad verzichtet werden.

Gemäß einer bevorzugten Ausführungsform der vorliegenden Erfindung ist das Verfahren dahingehend weitergebildet, dass das amorphe Material nach dem Ausbringen mit zumindest einer Flüssigkeit ausgewählt aus der Gruppe bestehend aus Wasser, einer wässrigen Schwefelsäurelösung, einer wässrigen Ligninsulfonatlösung und sulfonierten Aromaten, insbesondere Anilin-, Pyridin-, Naphthalin-, Anthracen-, Phenol und/oder Kresolderivaten, besprüht wird, insbesondere bis zu einer Temperatur des verglasten Materials von zwischen 120°C und 250°C, wobei es zu aus dem Stand der Technik bekannten Sulfatierungsreaktionen kommt und wie weiter oben erwähnte Störstoffe entfernt oder umgewandelt werden können. Die gebildeten Schlackenprodukte verbessern insbesondere die Schlackenzementverarbeitung signifikant durch eine massive Reduktion des Mörtel-Wasseranspruches. Dies führt zu einer Erhöhung der Frühfestigkeit sowie der Frostbeständigkeit und Taubeständigkeit der daraus hergestellten Mörtel und Betonsorten. Naturgemäß können auch Mischungen von verdünnter Schwefelsäure und sulfonierten Aromaten eingesetzt werden und so optimal auf den jeweiligen Mörtel- und Betonanwendungsfall eingegangen werden. Derartige Zemente weisen darüber hinaus eine erhöhte Chemikalien- und im Speziellen Sulfatbeständigkeit aus.

Bei dieser Variante der vorliegenden Erfindung werden bevorzugt die beim Besprühen gebildeten Brüden kondensiert und rückgewonnen, um ein Entweichen der Dämpfe in die Arbeitsumgebung und/oder die Atmosphäre zu verhindern und gleichzeitig das Verfahren ökonomischer zu gestalten.

Aufgrund der Oberflächenbeschaffenheit des im Zuge des erfindungsgemäßen Verfahrens hergestellten amorphen Materials, besteht keine Tendenz des Metalls aus dem Metallbad an der granulierten Schmelze anzuhaften. Sollte dies jedoch im Einzelfall aufgrund der Form des Granulats dennoch geschehen, kann das erfindungsgemäße Verfahren mit Vorteil dahingehend weitergebildet sein, dass das amorphe Material zur Entfernung mitgeschleppten Metalls filtriert und/oder zentrifugiert wird.

Die erfindungsgemäße Vorrichtung zur Durchführung des erfindungsgemäßen Verfahrens umfasst eine Granuliergießwanne mit bevorzugt ringförmigem oder rechteckigem Querschnitt zur Aufnahme eines Metallbades, ein Tauchrohr mit einem offenen Ende im für das Metallbad vorgesehenen Granulierbereich der Granuliergießwanne und einen Austragsbereich für das amorphe Material und ist dadurch gekennzeichnet, dass im Bereich des offenen Endes des Tauchrohrs ein mechanischer Desintegrator, bevorzugt Rotor, angeordnet ist.

Gemäß einer bevorzugten Ausführungsform der vorliegenden Erfindung ist im Inneren des Tauchrohrs eine in das Metallbad eintauchende Lanze zum Ausstoßen eines Gasstroms geführt und bevorzugt sind im Metallbad im Bereich der Mündung der Lanze Führungseinbauten zur Lenkung einer Strömung angeordnet. Aus der Lanze kann ein Gasstrom aus Inertgasen wie Stickstoff oder CO₂ oder aus reaktiven Gasen wie NH₃, H₂ oder CO in den Bereich des offenen Endes und in die oberste Schicht des Metallbades sowie durch die Führungseinbauten ausgestoßen werden, um durch den entstehenden Sog das schmelzflüssige Material in das Metallbad zu fördern und gleichzeitig hohen Scherkräften zur Zerkleinerung auszusetzen. Durch die entstehende Strömung wird das gebildete amorphe Material bzw. Granulat aus dem Bereich des offenen Endes des Tauchrohrs gefördert.

Gemäß einer weiters bevorzugten Ausführungsform der vorliegenden Erfindung ist aus dem Metallbad eine Lanze zum offenen Ende des in das Metallbad eintauchenden Tauchrohrs zum Ausstoßen eines Gasstroms gerichtet und bevorzugt sind im Metallbad im Bereich der Mündung der Lanze Führungseinbauten zur Lenkung einer Strömung angeordnet. Aus der Lanze kann ein Gasstrom aus Inertgasen wie Stickstoff oder CO₂ oder aus reaktiven Gasen wie H₂, NH₃ oder CO durch die Führungseinbauten in den Bereich des offenen Endes und in die oberste Schicht des Metallbades ausgestoßen werden, um durch den entstehenden Sog das schmelzflüssige Material in das Metallbad zu fördern und gleichzeitig hohen Scherkräften zur Zerkleinerung auszusetzen. Durch die entstehende Strömung wird das gebildete amorphe Material bzw. Granulat aus dem Bereich des offenen Endes des Tauchrohrs gefördert.

Für das Einbringen der Schmelze kann es gemäß einer bevorzugten Ausführungsform der vorliegenden Erfindung vorgesehen sein, dass das Tauchrohr mit einer Austragsöffnung eines das schmelzflüssige Material aufnehmenden Vorratstundish in Verbindung steht und ein Wehrrohr zur Ausbildung eines gegebenenfalls unterbrochenen Ringraums in das schmelzflüssige Material eintaucht. Die Ausbildung eines Ringraums entlang des Umfangs eines Wehrrohrs in einem Vorratstundish für das schmelzflüssige Material führt dazu, dass dann, wenn Schlackenschmelze oder eine ähnliche Schmelze durch den Ringraum in das Tauchrohr tritt, eine Vorzerteilung der Schmelze im Tauchrohr erreicht wird, sodass die Schmelze als relativ dünner Film in das Metallbad eintritt und daher besonders einfach desintegriert werden kann. Das Wehrrohr kann zur Ausbildung eines Ringraums mit einstellbarer Höhe ausgebildet sein, wie dies einer bevorzugten Weiterbildung der vorliegenden Erfindung entspricht, wodurch es in einfacher Weise möglich wird, den Durchfluss der Schmelze durch den Ringraum in das Tauchrohr zu regeln und diesen an die jeweiligen Erfordernisse des Prozesses anzupassen.

Bevorzugt ist in dem Vorratstundish ein Reaktiv-Metallbad, bevorzugt Reaktiv-Zinnbad, vorgehalten, wobei das Reaktiv-Metallbad Reaktivkomponenten ausgewählt aus der Gruppe bestehend aus Kalkträgern und SiO₂-Trägern zur Einstellung der Basizität (CaO/SiO₂) des schmelzflüssigen Materials auf eine Zielbasizität von 0,85 bis 1,6, bevorzugt 1,3 bis 1,6, enthält. Die hiermit verbunden Vorteile wurden bereits im Zusammenhang mit dem erfindungsgemäßen Verfahren erläutert.

Weiters bevorzugt enthält das Reaktiv-Metallbad Al₂O₃-Träger zur Einstellung eines Al₂O₃-Gehalts im schmelzflüssigen Material von 4 Gew.-% bis 18 Gew.-%. Die hiermit verbunden Vorteile wurden bereits im Zusammenhang mit dem erfindungsgemäßen Verfahren erläutert.

Um für eine besonders gründliche Desintegration der Schmelze beim Einbringen in das Metallbad zu sorgen, ist die erfindungsgemäße Vorrichtung bevorzugt dahingehend weitergebildet, dass der mechanische Desintegrator von einer Mehrzahl von zu Rotation antreibbaren Aktoren und von der Wandung der Granuliergießwanne entspringenden Statoren gebildet ist. Wenn die Aktoren zur Rotation angetrieben werden, bewegen sie sich knapp an den Statoren vorbei, sodass in den Bereichen zwischen den Aktoren und den Statoren hohe Scherkräfte im Metallbad auftreten, die zu einer feinteiligen Zerteilung der eingebrachten Schmelze führen. Dies führt wiederum zu besonders rascher Abkühlung der Schmelze im Metallbad und damit zu hochgradig amorphem Material als Endprodukt.

Gemäß einer bevorzugten Ausführungsform der vorliegenden Erfindung ist es vorgesehen, dass die Statoren und/oder die Aktoren zur Abgabe von Inertgas, bevorzugt Stickstoff, in das Metallbad ausgebildet sind. Dies führt zum Einen dazu, dass das Inertgas den Luftsauerstoff von der Oberfläche des Metallbads verdrängt und dadurch die Haltbarkeit des Metallbads verlängert wird und zum Anderen zu einer Auflockerung des an der Oberfläche des Metallbads schwimmenden amorphen Materials, sodass eventuell an Partikeln des amorphen Materials anhaftendes Zinn besser ablaufen kann. Darüberhinaus kann das Inertgas in gewissem Maß zu einer Kühlung des Metallbads beitragen. Gemäß einer weiteren bevorzugten Ausführungsform sind die Statoren und/oder Aktoren zur Durchführung eines Kühlmittels ausgebildet.

Gemäß einer bevorzugten Ausführungsform der vorliegenden Erfindung ist der Gasraum der Granuliergießwanne mit einer Leitung für Inertgas verbunden, sodass der Gasraum der Granuliergießwanne bei Bedarf auch selektiv mit Inertgas, bevorzugt Stickstoff gespült werden kann, um die Haltbarkeit des Metallbades zu verlängern.

Die im kontinuierlichen und industriellen Betrieb des erfindungsgemäßen Verfahrens sowie der erfindungsgemäßen Vorrichtung über die Schmelze eingebrachten Wärmemengen können gemäß einer bevorzugten Ausführungsform dadurch abgeleitet werden, dass in oder an der Wandung der Granuliergießwanne ein Wärmetauscher als Kühlkörper angeordnet ist. Die hierbei angesprochene Wandung der Granuliergießwanne kann entweder der Boden und/oder zumindest eine Seitenwand der Granuliergießwanne sein. Alternativ oder zusätzlich kann die erfindungsgemäße Vorrichtung auch dahingehend weitergebildet sein, dass in der Granuliergießwanne im Volumen für das Metallbad ein Wärmetauscher als Kühlkörper angeordnet ist. In diesem Fall taucht der Wärmetauscher direkt in das Metallbad ein, was zwar einerseits einen verbesserten Wärmeübergang vom Metallbad zum Kühlmedium mit sich bringt, andererseits aber den Wärmetauscher einer größeren Abnutzung aussetzt, sodass die beiden genannten Varianten der Anordnung des Wärmetauschers je nach Einsatzgebiet gewählt oder auch miteinander kombiniert werden können. Das dabei erhöhte Metallbad- bzw. Zinnbadvolumen führt zu einem Wärme-Puffer, sodass die Granulation sehr flexibel hinsichtlich des Schlackenzuflusses ist. Bei stark schwankendem Schlackenzufluss wird mit mehreren Tauchrohren und damit im optimalen Schlackenverteilbereich gearbeitet

In besonders bevorzugter Weise ist im Austragsbereich eine Austragsvorrichtung in Form eines Förderrads angeordnet. Mit dem Förderrad wird das Material von der Oberfläche des Metallbads über einen Rand oder eine Austragsöffnung einer Granuliergießwanne, in dem das Metallbad vorgehalten wird, gefördert und fällt danach in der Regel in einen hier nicht näher beschrieben Behälter oder eine Rohrleitung und kann weiter bearbeitet oder abgelagert werden. Das Förderrad kann auch als Hohlwalze mit perforierter Oberfläche ausgebildet sein, auf der eventuell noch am Granulat anhaftendes Zinn aus dem Metallbad abrinnen kann, wie diese einer bevorzugten Ausführungsform der vorliegenden Erfindung entspricht. Das Abtrennen anhaftenden Zinns vom Granulat kann bevorzugt durch einen Stickstoffstrom unterstützt werden, der aus einem entsprechenden Register auf die perforierte Oberfläche der Hohlwalze gerichtet wird. Zusätzlich kann das Granulat von der Innenseite der Hohlwalze mittels eines Luft- oder Stickstoffstroms an einem Austragsende der Hohlwalze von der Oberfläche der Hohlwalze abgeblasen werden.

Alternativ kann gemäß einer bevorzugten Ausführungsform der vorliegenden Erfindung im Austragsbereich eine Austragsvorrichtung in Form einer Mehrzahl von über Umlenkrollen geführten, einander nachgeordneten Förderbändern aus Stahlband angeordnet sein, wobei die Förderbänder ansteigend, bevorzugt in einem Winkel von 30° bis 50°, besonders bevorzugt 40° zu der Oberfläche des Metallbades, aus dem Metallbad geführt sind, wobei jeweils an einer oberen Umlenkrolle ein Abwurf für das amorphe Material und/oder aus dem Metallbad mitgeschlepptes Metall gebildet ist und jeweils ein Abwurf eines Förderbandes über einem nachgeordneten Förderband zur Ausbildung einer Kaskade von Förderbändern angeordnet ist. Eine solche Kaskade von Förderbändern stellt eine überaus effektive Vorrichtung zur Abtrennung von aus dem Metallbad mitgeschleppten Metalls, insbesondere Zinn, dar, wobei sich in Versuchen ein Steigungswinkel von 30°-50°, insbesondere ungefähr 40° gegenüber der Metallbadoberfläche als besonders wirkungsvoll erwiesen hat. Das erste Förderband hebt somit amorphes Material mit daran anhaftendem Metall aus dem Metallbad und wirft das amorphe Material am Abwurf auf das nächste ansteigende Förderband, wobei anhaftendes Metall sukzessive vom amorphen Material abläuft. Auf diese Weise wird nach und nach das gesamte Metall vom amorphen Material abgetrennt. Alternativ ist es gemäß einer bevorzugten Ausführungsform der vorliegenden Erfindung auch denkbar, dass eine schräggestellte, in das Metallbad eintauchende Rüttelrinnen-Kaskade vorgesehen ist, um das überschüssige Metall abzutrennen.

Zur Unterstützung der Abtrennung des Metalls vom amorphen Material kann die Erfindung bevorzugt dahingehend weitergebildet sein, dass jeweils im Bereich der oberen Umlenkrolle eine weitere Rolle, bevorzugt federnd, gegen das Förderband gehalten ist. Diese weitere Rolle, die auch als Quetschrolle bezeichnet werden kann, übt auf das amorphe Material einen bevorzugt einstellbaren Druck aus und quetscht somit anhaftendes Metall aus der Masse des amorphen Materials. Bevorzugt sind die weiteren Rollen bzw. Quetschrollen isotherm gehalten.

Zuletzt kann am Ende der Kaskade der Förderbänder der Abwurf des letzten der einander nachgeordneten Förderbänder über einer Einwurföffnung einer Kühlvorrichtung für das amorphe Material angeordnet sein, wobei die Kühlvorrichtung bevorzugt von einem Kühlmittel, bevorzugt im Gegenstrom, durchströmt ist, wie dies einer bevorzugten Ausführungsform der vorliegenden Erfindung entspricht. Auch hier ist eine Reihe verschiedener Kühlmittel denkbar, wobei die Kühlung bevorzugt bis zu einer Temperatur von etwa 150°C durchgeführt wird. Die Kühlvorrichtung für das amorphe Material ist bevorzugt in Form einer horizontal verlaufenden Förderschnecke ausgebildet, die von einem doppelwandigen Gehäuse zur Einleitung von Kühlmittel in die Gehäusewand umgeben ist.

Die Erfindung wird nachfolgend anhand eines in der Zeichnung dargestellten Ausführungsbeispiels näher erläutert. In dieser zeigen
Figur 1 eine schematische Darstellung einer erfindungsgemäßen Vorrichtung mit einem Tauchrohr und einem mechanischen Desintegrator zur Förderung und Desintegration der Schmelze und einem Wärmetauscher im Volumen für das Metallbad in der Granuliergießwanne,
Figur 2 eine erfindungsgemäße Variante einer erfindungsgemäßen Vorrichtung mit einem mechanischen Desintegrator in Form eines Rotors,
Figur 3 eine bevorzugte Ausbildung eines Rotors,
Figur 4 eine teilweise Draufsicht auf den mechanischen Desintegrator gemäß Fig. 3,
Figur 5 eine Darstellung einer erfindungsgemäßen Austragsvorrichtung in Form einer Hohlwalze,
Figur 6 eine erfindungsgemäße Variante einer erfindungsgemäßen Vorrichtung mit einem Desintegrator in Form einer im Inneren des Tauchrohrs geführten und in das Metallbad eintauchenden Lanze,
Figur 7 eine erfindungsgemäße Variante einer erfindungsgemäßen Vorrichtung mit einem Desintegrator in Form einer aus dem Metallbad zum offenen Ende des in das Metallbad eintauchenden Tauchrohrs gerichteten Lanze,
Figur 8 eine Austragsvorrichtung und
Figur 9 eine bevorzugte Variante einer Ausbildung eines Vorratstundish.

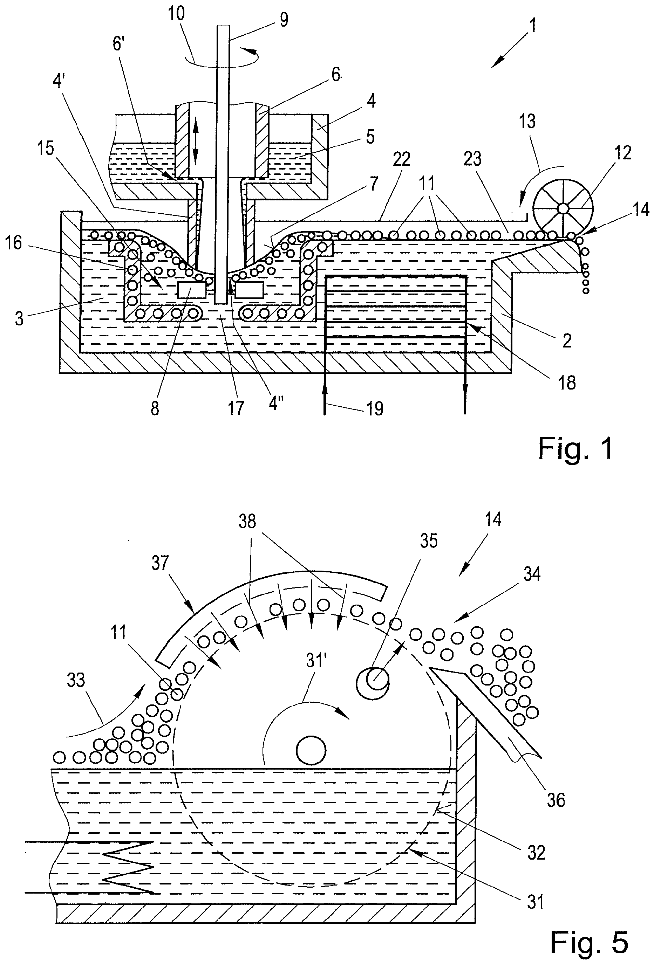

Eine erfindungsgemäße Vorrichtung bzw. Granuliervorrichtung 1 zur Verwendung bei der Durchführung des erfindungsgemäßen Verfahrens umfasst gemäß Fig. 1 eine Granuliergießwanne bzw. einen Granuliertundish 2, in dem ein Metallbad 3 aus flüssigem Zinn vorgehalten wird. Aus einem Vorratstundish 4, in dem sich das zu verglasende schmelzflüssige Material 5 bzw. die Schmelze 5 befindet, wird das schmelzflüssige Material 5 mittels eines Wehrrohrs 6, welches zusammen mit dem Vorratstundish 4 einen Ringraum 6' ausbildet, über das offene Ende 4" des Tauchrohrs 4' in den darunterliegenden Granuliertundish 2 mit dem Metallbad 3 dosiert. Die Schmelze 5 trifft als im Wesentlichen hohlzylindrischer Mantel auf die Oberfläche 7 des Metallbads 3 und wird durch die Wirkung des mechanischen Desintegrators 8, in diesem Fall Rotors 8, der mittels der Welle 9 zur Rotation im Sinne des Pfeils 10 angetrieben ist, im Metallbad 3 großen Scherkräften ausgesetzt. Dadurch kommt es zu einer Desintegration der Schmelze 5 im Metallbad, die feinteilig im Metallbad 3 abgekühlt wird und augenblicklich im glasartigen, amorphen Zustand erstarrt und somit granuliert wird. Das Granulat 11 bzw. das amorphe Material 11 wird mit Hilfe des Förderrads 12, welches zur Rotation im Sinne des Pfeils 13 angetrieben ist, im Austragsbereich 14 des Granuliertundish 2 ausgetragen und in einen nicht dargestellten Behälter abgeworfen. Der Granuliertundish 2 weist im Bereich des mechanischen Desintegrators 8 bzw. Rotors 8 eine Mischkammer 15 auf, die durch einen Wärmetauscher 16 möglichst gleichbleibend bei einer Temperatur von beispielsweise 300°C gehalten wird. Die Schmelze 5 strömt in die Mischammer 15 und wird dort in das Metallbad 3 eingemischt. Die Mischkammer weist an ihrem Grund eine Öffnung 17 auf, durch die durch die Wirkung des Rotors 8 Zinnschmelze aus dem Metallbad 3 angesaugt wird, was im Bereich des Rotors 8 zu einer Erhöhung der Turbulenz führt, um die Desintegration der Schmelze 5 zu optimieren.

Mit 18 ist ein Wärmetauscher im Volumen für das Metallbad 3 im Granuliertundish 2 bezeichnet, in dem ein Kühlmittel 19 strömt und über den der Großteil der durch die Schmelze 5 eingebrachten Wärme aus dem Metallbad 3 bzw. aus der Granuliervorrichtung 1 abtransportiert und einer Verwertung zugeführt wird. Der Gasraum 23 des Granuliertundish 2 ist mit einer Abdeckung 22 abgedeckt.

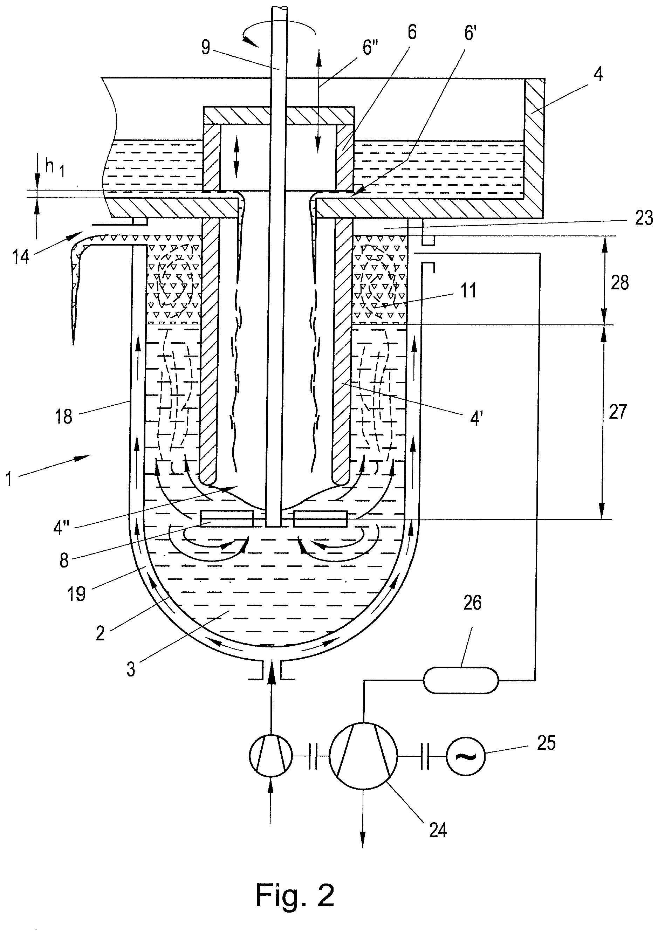

In Fig. 2 sind gleiche Merkmale mit gleichen Bezugszeichen versehen. Insbesondere ist wiederum ein Granuliertundish 2 mit einem Metallbad 3 aus Zinn dargestellt. Über den Ringraum 6', der in seiner Höhe h₁ durch Heben und Senken des Wehrrohrs 6 im Sinne des Doppelpfeils 6" einstellbar ist, kann die Schmelze 5 über das offene Ende 4" des Tauchrohrs 4' in das Metallbad 3 eingebracht und Hilfe des Rotors 8 desintegriert werden. Die Schmelze 5 wird feinteilig im Metallbad 3 abgekühlt und erstarrt augenblicklich im glasartigen, amorphen Zustand und wird somit granuliert. Das Granulat 11 wird im Austragsbereich 14 ausgetragen und in einen nicht dargestellten Behälter abgeworfen. Das Metallbad 3 wird auch hier bei einer Temperatur von etwa 300°C vorgehalten, welche Temperatur mittels des Wärmetauschers 18 aufrechterhalten wird. Der Granuliertundish 2 ist durch den Vorratstundish 4 abgedeckt und der Gasraum 23 über dem Metallbad 3 kann bevorzugt zur Schonung und damit zur Verlängerung der Haltbarkeit des Metallbads 3 mit einem Inertgas, insbesondere mit Stickstoff gespült werden.

Der Wärmetauscher 18 fördert in dem in Fig. 2 gezeigten Beispiel Luft als Kühlmittel 19, wobei die Wärme des Kühlmittels über eine Kraft-Wärme-Kopplung in Form einer Gasturbine 24, die mit einem Generator 25 gekoppelt ist, als elektrische Energie rückgewonnen wird. Bevorzugt kann der heißen Abluft bzw. dem Kühlmittel in einer Brennkammer 26 ein Brennstoff zugegeben werden, um beispielsweise minderwertige Brennstoffe, die in Form von Stäuben, Gasen oder Flüssigkeiten wie z.B. Teer beispielsweise bei der Herstellung des schmelzflüssigen Materials aus Klärschlamm in geringen Mengen anfallen, nutzbringend zu entsorgen. In Fig. 2 ist die Höhe des Metallbads 3 als Granulierzone 27 zu verstehen, auf die im Gasraum 23, im Bereich des aufgeschichteten amorphen Materials 11 bzw. Granulats 11 eine Filtrierzone 28 folgt, in der eventuell mitgeschlepptes Zinn abtropfen kann.

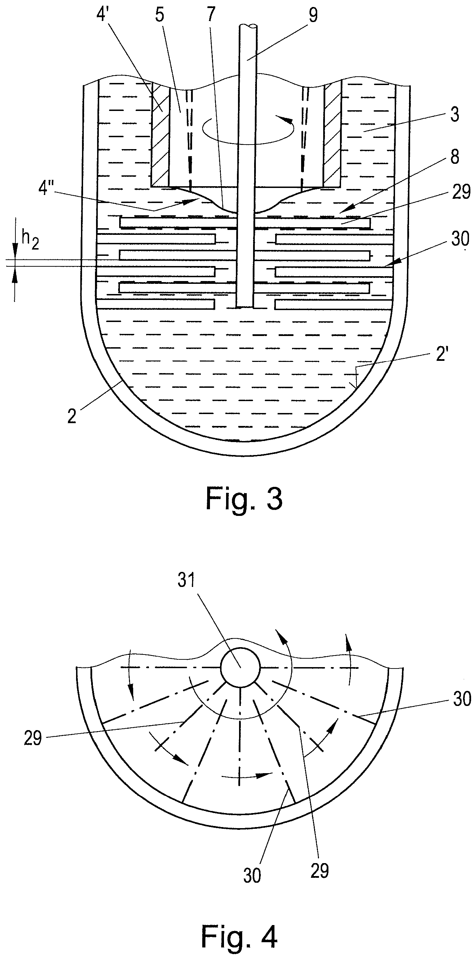

In den Figuren 3 und 4 ist der mechanische Desintegrator 8 von einer Mehrzahl von mittels einer Welle 9 zu Rotation antreibbaren Aktoren 29 und von der Wandung 2' des Granuliertundish 2 entspringenden Statoren 30 gebildet. Die Aktoren 29 und/oder die Statoren 30 können zur Abgabe von Inertgas in das Metallbad 3 ausgebildet sein. Wie Figur 3 zu entnehmen ist, besteht zwischen den Aktoren 29 und den Statoren 30 nur ein relativ geringer Abstand h₂, wodurch auf die über das offene Ende 4" des Tauchrohrs 4' in das Metallbad 3 eingebrachte Schmelze 5 hohen Scherkräften zur Desintegration ausgesetzt wird, wenn die Statoren 30 von den Aktoren 29 überstrichen werden, wie dies in Figur 4 schematisch dargestellt ist.

In Figur 5 ist im Austragsbereich 14 anstatt eines Förderrads eine im Sinne des Pfeils 31' zur Rotation antreibbare Hohlwalze 31 angeordnet, die eine perforierte Oberfläche 32 aufweist, um eventuell am Granulat 11 anhaftendes Zinn ablaufen lassen zu können, nachdem es von der Hohlwalze 31 im Sinne des Pfeils 33 erfasst wurde und während das Granulat 11 zu einem Austragsende 34 der Hohlwalze 31 gefördert wird, um dort von einem Gebläse 35 von der Oberfläche 32 abgeblasen zu werden. Ergänzend hierzu kann noch ein Schaber 36 vorgesehen sein, um Granulat 11 von der Oberfläche 32 der Hohlwalze 31 abzuschaben. Mit 37 ist ein Register bezeichnet, aus dem ein Gasstrom im Sinne der Pfeilschar 38, insbesondere aus Luft oder einem isotherm mit der Zinnbad-Temperatur gehaltenen Inertgas, optional gemischt mit Reduktionsgas (H2, CO, NH3), insbesondere Stickstoff, zum Abtrennen anhaftenden Zinns vom Granulat 11 auf die perforierte Oberfläche 32 der Hohlwalze 31 gerichtet wird.

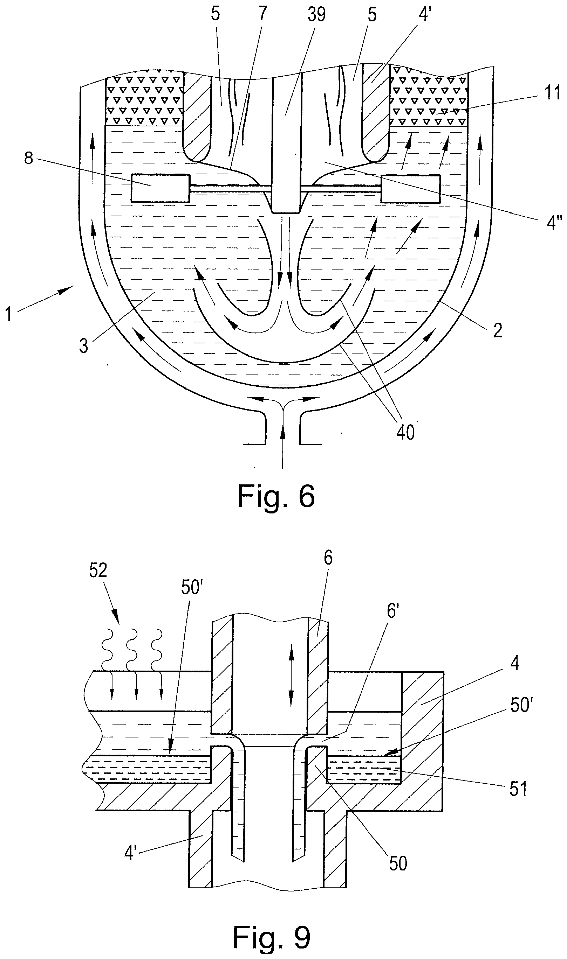

In der Figur 6 sind gleiche Merkmale mit gleichen Bezugszeichen wie in Figur 2 bezeichnet und es ist zu erkennen, dass eine im Inneren des Tauchrohrs 4' geführte und in das Metallbad 3 eintauchende Lanze 39 vorgesehen ist. Aus der Lanze 39 kann ein Gasstrom aus Inertgasen wie Stickstoff oder CO₂ und/oder aus reaktiven Gasen wie H₂ oder CO oder NH₃ in den Bereich des offenen Endes 4" und in die oberste Schicht des Metallbades 3 ausgestoßen werden, um durch den entstehenden Sog das schmelzflüssige Material 5 in das Metallbad 3 zu fördern und gleichzeitig hohen Scherkräften zur Zerkleinerung auszusetzen. Durch die entstehende Strömung wird das gebildete amorphe Material 11 bzw. Granulat 11 aus dem Bereich des offenen Endes 4" des Tauchrohrs 4' gefördert. Mit 40 sind Führungseinbauten zur Lenkung einer Strömung bezeichnet. Die Lanze 39 kann drehbar gelagert sein und als Welle für eine optionalen Desintegrator 8 genutzt werden.

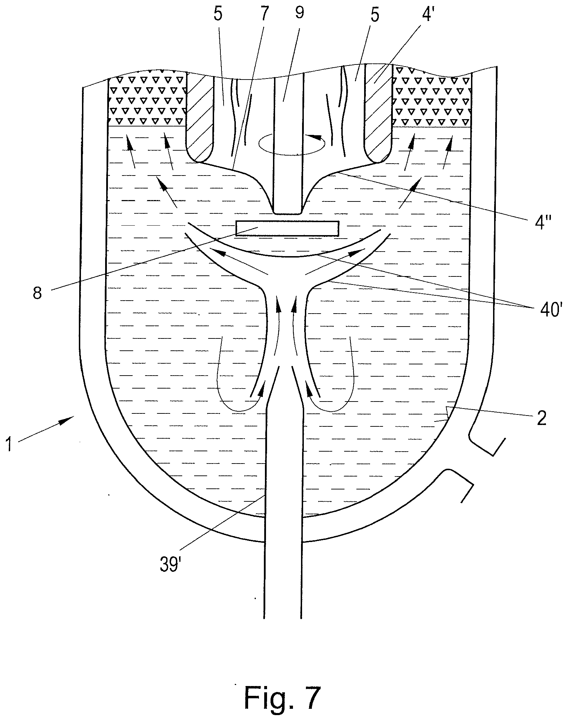

Weiters ist in Figur 7 eine aus dem Metallbad 3 zum offenen Ende 4" des in das Metallbad 3 eintauchenden Tauchrohrs gerichtete Lanze 39' dargestellt. Im Bereich der Mündung der Lanze 39 sind Führungseinbauten 40' zur Lenkung einer Strömung angeordnet. Aus der Lanze 39' kann ein Gasstrom aus Inertgasen wie Stickstoff oder CO₂ und/oder aus reaktiven Gasen wie H₂, CO oder NH₃ durch die Führungseinbauten 40' in den Bereich des offenen Endes 4" und in die oberste Schicht des Metallbades 3 ausgestoßen werden, um durch den entstehenden Sog das schmelzflüssige Material 5 in das Metallbad 3 zu fördern und gleichzeitig hohen Scherkräften zur Zerkleinerung auszusetzen. Durch die entstehende Strömung wird das gebildete amorphe Material 11 bzw. Granulat 11 aus dem Bereich des offenen Endes 4" des Tauchrohrs 4' gefördert.

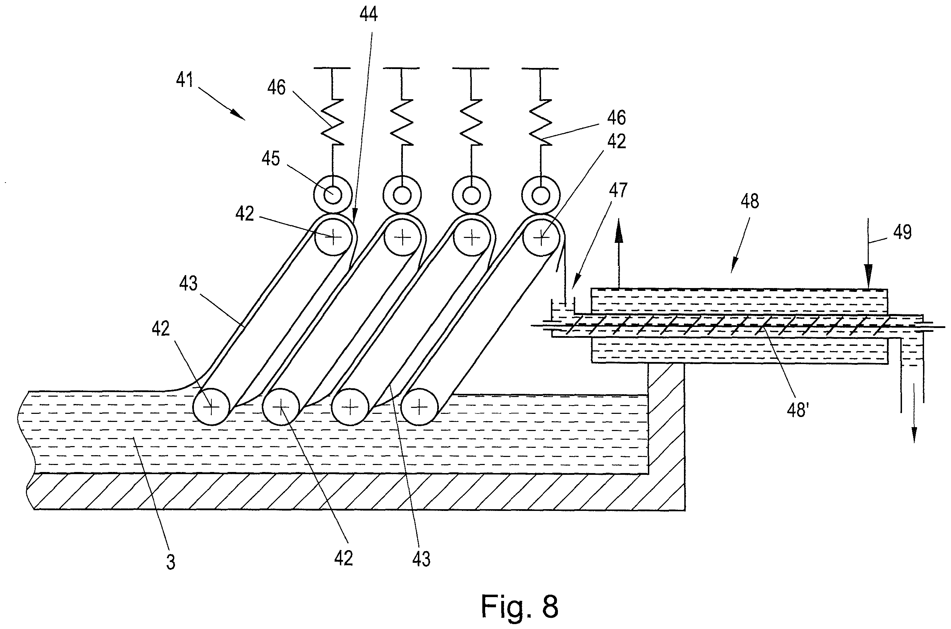

In Fig. 8 ist eine Austragsvorrichtung 41 in Form einer Mehrzahl von über Umlenkrollen 42 geführten, einander nachgeordneten Förderbändern 43 aus Stahlband dargestellt, wobei die Förderbänder 43 ansteigend ungefähr in einem Winkel von 30° bis 50° zu der Oberfläche des Metallbades 3, aus dem Metallbad 3 geführt sind, wobei jeweils an einer oberen Umlenkrolle 42 ein Abwurf 44 für das amorphe Material 11 und aus dem Metallbad 3 mitgeschlepptes Metall gebildet ist und jeweils ein Abwurf 44 eines Förderbandes 43 über einem nachgeordneten Förderband 43 zur Ausbildung einer Kaskade von Förderbändern 43 angeordnet ist. Jeweils im Bereich der oberen Umlenkrolle 42 ist eine weitere Rolle 45, mittels jeweils einer Feder 46, gegen das Förderband 43 gehalten. Diese weitere Rollen 45, die auch als Quetschrollen bezeichnet werden können, üben auf das amorphe Material 11 einen einstellbaren Druck aus und quetschen somit anhaftende Metallschmelze aus der Masse des amorphen Materials 11. Der Abwurf 44 des letzten der einander nachgeordneten Förderbänder 43 ist über einer Einwurföffnung 47 einer Kühlvorrichtung 48 für das amorphe Material angeordnet, wobei die Kühlvorrichtung 48 bevorzugt von einem Kühlmittel 49, bevorzugt im Gegenstrom, durchströmt ist. Das Kühlmittel 49 kann wiederum zur Kühlung der Granuliergießwanne 2 eingesetzt werden und zu diesem Zweck der Wandung der Granuliergießwanne 2 zugeführt werden, wie dies in Figur 2 dargestellt ist. Die Kühlvorrichtung 48 weist zur Förderung des Granulats 11 eine Förderschnecke 48' auf.

In der Darstellung nach Figur 9 ist zu erkennen, dass durch das Vorsehen eines ringförmigen Wehrs 50 bzw. Wehrsteins 50 ein Volumen 50' für das Vorhalten eines Reaktiv-Metallbads 51 gebildet wird, wobei der Ringraum 6' in diesem Fall zwischen dem Wehr 50 und dem Wehrrohr 6 gebildet wird. Mit den Pfeilen 52 ist versinnbildlicht, dass der Vorratstundish 4 beheizbar ist, falls dies notwendig sein sollte.

## Patentansprüche

1. Verfahren zum Verarbeiten von schmelzflüssigem Material (5), in Form von nichtmetallischer Schmelze (5) wie Schlacke, zu amorphem Material (11), bei welchem das schmelzflüssige Material (5) durch Kühlen verglast wird, wobei das schmelzflüssige Material (5) zum Verglasen mit einem Metallbad (3) in Kontakt gebracht und anschließend als amorphes Material (11) aus dem Metallbad (3) ausgebracht wird, **dadurch gekennzeichnet, dass** das schmelzflüssige Material (5) über ein offenes Ende (4") eines in das Metallbad (3) eintauchenden Tauchrohrs (4') in das Metallbad (3) eingebracht wird und im Metallbad (3), bevorzugt mittels eines mechanischen Desintegrators (8), bevorzugt Rotors (8), aus dem Bereich des offenen Endes (4") des Tauchrohrs (4') gefördert wird.

2. Verfahren nach Anspruch 1, **dadurch gekennzeichnet, dass** das schmelzflüssige Material (5) zumindest teilweise mittels eines über eine Lanze (39) in das Metallbad (3) eingebrachten Gasstroms aus dem Bereich des offenen Endes (4") des Tauchrohrs (4') gefördert wird, wobei bevorzugt im Metallbad (3) im Bereich der Mündung der Lanze (39) Führungseinbauten (40) zur Lenkung einer Strömung angeordnet sind.

3. Verfahren nach Anspruch 2, **dadurch gekennzeichnet, dass** die Lanze (39) im Inneren des Tauchrohrs (4') geführt ist und von oben in das Metallbad (3) eintaucht oder die Lanze (39') aus dem Metallbad (3) zum offenen Ende (4") des Tauchrohrs (4') gerichtet ist.

4. Verfahren nach Anspruch 1, 2 oder 3, **dadurch gekennzeichnet, dass** das schmelzflüssige Material (5) einem dem Metallbad (3) vorgeschalteten Reaktiv-Metallbad (51), bevorzugt Reaktiv-Zinnbad (51), aufgegeben wird, wobei das Reaktiv-Metallbad (51) durch Zugabe von Reaktivkomponenten ausgewählt aus der Gruppe bestehend aus Kalkträgern und SiO₂-Trägern zur Einstellung der Basizität (CaO/SiO₂) des schmelzflüssigen Materials auf eine Zielbasizität von 0,85 bis 1,6, bevorzugt 1,3 bis 1,6, bereitet wird.

5. Verfahren nach Anspruch 4, **dadurch gekennzeichnet, dass** das Reaktiv-Metallbad durch Zugabe von Al₂O₃-Trägern zur Einstellung eines Al₂O₃-Gehalts im schmelzflüssigen Material von 4 Gew.-% bis 18 Gew.-% bereitet wird.

6. Verfahren nach einem der Ansprüche 1 bis 5, **dadurch gekennzeichnet, dass** das schmelzflüssige Material (5) durch die Wirkung eines mechanischen Desintegrators (8) in das Metallbad (3) gesaugt oder hineingedrückt wird.

7. Verfahren nach einem der Ansprüche 1 bis 6, **dadurch gekennzeichnet, dass** das Metallbad (3) aus Zinn, bevorzugt zu 3 Gew.-% mit Silber und zu einem 1 Gew.-% mit Kupfer legiert, gebildet wird.

8. Verfahren nach einem der Ansprüche 1 bis 7, **dadurch gekennzeichnet, dass** das Metallbad (3) bei einer unterhalb der Rekristallisationstemperatur des schmelzflüssigen Materials liegenden Temperatur, insbesondere bei einer Temperatur von zwischen 300°C und 600°C vorgehalten wird.

9. Verfahren nach einem der Ansprüche 1 bis 8, **dadurch gekennzeichnet, dass** die durch das schmelzflüssige Material (5) in das Metallbad (3) eingebrachte Wärme mittels eines durch einen Wärmetauscher (18) strömenden Kühlmittels (19) abgeführt wird.

10. Verfahren nach Anspruch 9, **dadurch gekennzeichnet, dass** das Kühlmittel (19) aus der Gruppe bestehend aus flüssigem Sauerstoff, Luft, Inertgas, Thermalöl, Wasser sowie ionischen Flüssigkeiten, insbesondere wässrigen Lösungen von Natrium-, Magnesium- und Calciumchlorid sowie Kaliumcarbonat gewählt wird.

11. Verfahren nach Anspruch 9 oder 10, **dadurch gekennzeichnet, dass** die Wärme des Kühlmittels (19) als mechanische und/oder elektrische Energie rückgewonnen wird, insbesondere in einer Gasturbine (24) oder einem Druckwasserwärmetauscher mit Kraft-Wärme-Kopplung.

12. Verfahren nach Anspruch 9, 10 oder 11, **dadurch gekennzeichnet, dass** die Wärme des Kühlmittels (19) zur Begünstigung chemischer Reaktionen eingesetzt wird.

13. Verfahren nach einem der Ansprüche 9 bis 12, **dadurch gekennzeichnet, dass** die Wärme des Kühlmittels (19) zur Depolymerisation von Kunststoffen, insbesondere von Polyethylen, Polypropylen und Polyethylenterephthalat eingesetzt wird.

14. Verfahren nach einem der Ansprüche 1 bis 13, **dadurch gekennzeichnet, dass** das amorphe Material (11) mithilfe eines Fördermittels ausgewählt aus der Gruppe bestehend aus Förderband und Förderrad (12) ausgebracht wird

15. Verfahren nach einem der Ansprüche 1 bis 14, **dadurch gekennzeichnet, dass** das Metallbad (3) mit einem Inertgas, insbesondere Stickstoff gespült wird.

16. Verfahren nach einem der Ansprüche 1 bis 15, **dadurch gekennzeichnet, dass** das amorphe Material (11) nach dem Ausbringen mit zumindest einer Flüssigkeit ausgewählt aus der Gruppe bestehend aus Wasser, einer wässrigen Schwefelsäurelösung, einer wässrigen Ligninsulfonatlösung und sulfonierten Aromaten, insbesondere Anilin-, Pyridin-, Naphthalin-, Anthracen-, Phenol und/oder Kresolderivaten, besprüht wird, insbesondere bis zu einer Temperatur des verglasten Materials von zwischen 120°C und 250°C.

17. Verfahren nach Anspruch 16, **dadurch gekennzeichnet, dass** die beim Besprühen gebildeten Brüden kondensiert und rückgewonnen werden.

18. Verfahren nach einem der Ansprüche 1 bis 17, **dadurch gekennzeichnet, dass** das amorphe Material (11) zur Entfernung von aus dem Metallbad mitgeschlepptem Metall filtriert und/oder zentrifugiert wird.

19. Vorrichtung zur Durchführung des Verfahrens nach einem der Ansprüche 1 bis 18, umfassend eine Granuliergießwanne (2) mit bevorzugt ringförmigem oder rechteckigem Querschnitt zur Aufnahme eines Metallbades (3), ein Tauchrohr (4') mit einem offenen Ende (4") im für das Metallbad (3) vorgesehenen Granulierbereich (27) der Granuliergießwanne (2) und einen Austragsbereich (14) für das amorphe Material (11), **dadurch gekennzeichnet, dass** im Bereich des offenen Endes (4") des Tauchrohrs (4') ein mechanischer Desintegrator (8), bevorzugt Rotor (8), angeordnet ist.

20. Vorrichtung nach Anspruch 19, **dadurch gekennzeichnet, dass** im Inneren des Tauchrohrs (4') eine in das Metallbad (3) eintauchende Lanze (39) zum Ausstoßen eines Gasstroms geführt ist und bevorzugt im Metallbad (3) im Bereich der Mündung der Lanze (39) Führungseinbauten (40) zur Lenkung einer Strömung angeordnet sind.

21. Vorrichtung nach Anspruch 19, **dadurch gekennzeichnet, dass** aus dem Metallbad (3) eine Lanze (39') zum offenen Ende (4") des in das Metallbad (3) eintauchenden Tauchrohrs (4') zum Ausstoßen eines Gasstroms gerichtet ist und bevorzugt im Metallbad (3) im Bereich der Mündung der Lanze (39') Führungseinbauten (40') zur Lenkung einer Strömung angeordnet sind.

22. Vorrichtung nach Anspruch 19, 20 oder 21, **dadurch gekennzeichnet, dass** das Tauchrohr (4') mit einer Austragsöffnung eines das schmelzflüssige Material (5) aufnehmenden Vorratstundish (4) in Verbindung steht und ein Wehrrohr (6) zur Ausbildung eines gegebenenfalls unterbrochenen Ringraums (6') in das schmelzflüssige Material (5) eintaucht.

23. Vorrichtung nach Anspruch 22, **dadurch gekennzeichnet, dass** in dem Vorratstundish (4) ein Reaktiv-Metallbad (51), bevorzugt Reaktiv-Zinnbad (51), vorgehalten ist, wobei das Reaktiv-Metallbad (51) Reaktivkomponenten ausgewählt aus der Gruppe bestehend aus Kalkträgern und SiO₂-Trägern zur Einstellung der Basizität (CaO/SiO₂) des schmelzflüssigen Materials (5) auf eine Zielbasizität von 0,85 bis 1,6, bevorzugt 1,3 bis 1,6, enthält.

24. Vorrichtung nach Anspruch 23, **dadurch gekennzeichnet, dass** das Reaktiv-Metallbad (51) Al₂O₃-Träger zur Einstellung eines Al₂O₃-Gehalts im schmelzflüssigen Material von 4 Gew.-% bis 18 Gew.-% enthält.

25. Vorrichtung nach einem der Ansprüche 19 bis 24, **dadurch gekennzeichnet, dass** der mechanische Desintegrator (8) von einer Mehrzahl von zu Rotation antreibbaren Aktoren (29) und von der Wandung (2') der Granuliergießwanne (2) entspringenden Statoren (30) gebildet ist.

26. Vorrichtung nach Anspruch 25, **dadurch gekennzeichnet, dass** die Statoren (30) und/oder die Aktoren (29) zur Abgabe von Inertgas, bevorzugt Stickstoff, in das Metallbad (3) ausgebildet sind.

27. Vorrichtung nach einem der Ansprüche 19 bis 26, **dadurch gekennzeichnet, dass** der Gasraum (23) der Granuliergießwanne (2) mit einer Leitung für Inertgas verbunden ist.

28. Vorrichtung nach einem der Ansprüche 19 bis 27, **dadurch gekennzeichnet, dass** in oder an der Wandung (2') der Granuliergießwanne (2) ein Wärmetauscher (18) als Kühlkörper angeordnet ist.

29. Vorrichtung nach einem der Ansprüche 19 bis 28, **dadurch gekennzeichnet, dass** in der Granuliergießwanne (2) im Volumen für das Metallbad (3) ein Wärmetauscher (18) als Kühlkörper angeordnet ist.

30. Vorrichtung nach einem der Ansprüche 19 bis 29, **dadurch gekennzeichnet, dass** im Austragsbereich (14) eine Austragsvorrichtung in Form eines Förderrads (12) angeordnet ist.

31. Vorrichtung nach einem der Ansprüche 19 bis 29, **dadurch gekennzeichnet, dass** im Austragsbereich (14) eine Austragsvorrichtung (41) in Form einer Mehrzahl von über Umlenkrollen (42) geführten, einander nachgeordneten Förderbändern (43), Z.B. aus Stahlband, angeordnet ist, wobei die Förderbänder (43) ansteigend, bevorzugt in einem Winkel von 30° bis 50°, besonders bevorzugt 40° zu der Oberfläche des Metallbades (3), aus dem Metallbad (3) geführt sind, wobei jeweils an einer oberen Umlenkrolle (42) ein Abwurf (44) für das amorphe Material (11) und/oder aus dem Metallbad (3) mitgeschlepptes Metall gebildet ist und jeweils ein Abwurf (44) eines Förderbandes (43) über einem nachgeordneten Förderband (43) zur Ausbildung einer Kaskade von Förderbändern (43) angeordnet ist.

32. Vorrichtung nach Anspruch 31, **dadurch gekennzeichnet, dass** jeweils im Bereich der oberen Umlenkrolle (42) eine weitere Rolle (45), bevorzugt federnd, gegen das Förderband (43) gehalten ist.

33. Vorrichtung nach Anspruch 31 oder 32, **dadurch gekennzeichnet, dass** der Abwurf (44) des letzten der einander nachgeordneten Förderbänder (43) über einer Einwurföffnung (47) einer Kühlvorrichtung (48) für das amorphe Material (11) angeordnet ist, wobei die Kühlvorrichtung (48) bevorzugt von einem Kühlmittel (49), bevorzugt im Gegenstrom, durchströmbar ist.

## Claims

1. A method of processing molten material (5), in the form of non-metallic melt (5) such as slag, into amorphous material (11), in which the molten material (5) is vitrified by cooling, wherein the molten material (5) for being vitrified is brought into contact with a metal bath (3) and then discharged as amorphous material (11) from the metal bath (3), **characterized in that** the molten material (5) is introduced into the metal bath (3) via an open end (4") of a dip tube (4') immersing into the metal bath (3) and in the metal bath (3) is conveyed away from the area of the open end (4") of the dip tube (4'), preferably by means of a mechanical disintegrator (8), preferably rotor (8).

2. The method according to claim 1, **characterized in that** the molten material (5) is conveyed from the area of the open end (4") of the dip tube (4') at least partially by means of a gas flow introduced into the metal bath (3) via a lance (39), wherein guide vanes (40) for directing a flow are preferably arranged in the metal bath (3) in the region of the mouth of the lance (39).

3. The method according to claim 2, **characterized in that** the lance (39) is guided inside the dip tube (4') and dips into the metal bath (3) from above, or the lance (39') is directed from the metal bath (3) towards the open end (4") of the dip tube (4').

4. The method according to claim 1, 2 or 3, **characterized in that** the molten material (5) is charged onto a reactive metal bath (51), preferably a reactive tin bath (51), that is arranged upstream of the metal bath (3), wherein the reactive metal bath (51) is prepared to adjust the basicity (CaO/SiO₂) of the molten material to a target basicity of 0.85 to 1.6, preferably 1.3 to 1.6, by the addition of reactive components selected from the group consisting of lime carriers and SiO₂ carriers.

5. The method according to claim 4, **characterized in that** the reactive metal bath is prepared by adding Al₂O₃ carriers to set an Al₂O₃ content in the molten material of 4 wt.-% to 18 wt.-%.

6. The method according to any one of claims 1 to 5, **characterized in that** the molten material (5) is sucked or pressed into the metal bath (3) by the action of a mechanical disintegrator (8).

7. The method according to any one of claims 1 to 6, **characterized in that** the metal bath (3) is formed from tin, preferably alloyed to 3% by weight with silver and 1% by weight with copper.

8. The method according to any one of claims 1 to 7, **characterized in that** the metal bath (3) is kept at a temperature below the recrystallization temperature of the molten material, in particular at a temperature of between 300°C and 600°C.

9. The method according to any one of claims 1 to 8, **characterized in that** the heat introduced into the metal bath (3) by the molten material (5) is dissipated by means of a coolant (19) flowing through a heat exchanger (18).

10. The method according to claim 9, **characterized in that** the coolant (19) is selected from the group consisting of liquid oxygen, air, inert gas, thermal oil, water and ionic liquids, in particular aqueous solutions of sodium, magnesium and calcium chloride and potassium carbonate.

11. The method according to claim 9 or 10, **characterized in that** the heat of the coolant (19) is recovered as mechanical and/or electrical energy, in particular in a gas turbine (24) or a pressurized water heat exchanger with combined heat and power.

12. The method according to claim 9, 10 or 11, **characterized in that** the heat of the coolant (19) is used to promote chemical reactions.

13. The method according to any one of claims 9 to 12, **characterized in that** the heat of the coolant (19) is used for the depolymerization of plastics, in particular of polyethylene, polypropylene and polyethylene terephthalate.

14. The method according to any one of claims 1 to 13, **characterized in that** the amorphous material (11) is discharged with the aid of a conveying means selected from the group consisting of a conveyor belt and a conveyor wheel (12).

15. The method according to any one of claims 1 to 14, **characterized in that** the metal bath (3) is flushed with an inert gas, in particular nitrogen.

16. The method according to any one of claims 1 to 15, **characterized in that** the amorphous material (11), after having been discharged, is sprayed with at least one liquid selected from the group consisting of water, an aqueous sulfuric acid solution, an aqueous lignin sulfonate solution and sulfonated aromatics, in particular aniline, pyridine, naphthalene, anthracene, phenol and/or cresol derivatives, in particular up to a temperature of the vitrified material of between 120°C and 250°C.

17. The method according to claim 16, **characterized in that** the vapors formed during spraying are condensed and recovered.

18. The method according to any one of claims 1 to 17, **characterized in that** the amorphous material (11) is filtered and/or centrifuged to remove metal entrained from the metal bath.

19. A device for carrying out the method according to any one of claims 1 to 18, comprising a granulating tundish (2) with a preferably annular or rectangular cross-section for receiving a metal bath (3), a dip tube (4') having an open end (4") in the granulating area (27) of the granulating tundish (2) provided for the metal bath (3), and a discharge region (14) for the amorphous material (11), **characterized in that** a mechanical disintegrator (8), preferably rotor (8), is arranged in the area of the open end (4") of the dip tube (4').

20. The device according to claim 19, **characterized in that** a lance (39) immersed in the metal bath (3) for ejecting a gas flow is guided inside the dip tube (4') and that preferably guide vanes (40) for directing a gas flow are arranged in the metal bath (3) in the area of the mouth of the lance (39).

21. The device according to claim 19, **characterized in that** a lance (39') is directed from the metal bath (3) towards the open end (4") of the dip tube (4') immersed in the metal bath (3) for ejecting a gas stream and that preferably guide vanes (40') for directing a gas flow are arranged in the metal bath (3) in the area of the mouth of the lance (39').

22. The device according to claim 19, 20 or 21, **characterized in that** the dip tube (4') is connected to a discharge opening of a storage tundish (4) which receives the molten material (5) and that a weir tube (6) for forming an optionally interrupted annular space (6') is immersed in the molten material (5).

23. The device according to claim 22, **characterized in that** a reactive metal bath (51), preferably reactive tin bath (51), is kept in the storage tundish (4), wherein the reactive metal bath (51) comprises reactive components selected from the group consisting of lime carriers and SiO₂ carriers for adjusting the basicity (CaO/SiO₂) of the molten material (5) to a target basicity of 0.85 to 1.6, preferably 1.3 to 1.6.

24. The device according to claim 23, **characterized in that** the reactive metal bath (51) contains Al₂O₃ carriers for setting an Al₂O₃ content in the molten material of 4 wt.-% to 18 wt.-%.

25. The device according to any one of claims 19 to 24, **characterized in that** the mechanical disintegrator (8) is formed by a plurality of actuators (29) which can be driven to rotate and by stators (30) emerging from the wall (2') of the granulating tundish (2).

26. The device according to claim 25, **characterized in that** the stators (30) and/or the actuators (29) are designed to emit inert gas, preferably nitrogen, into the metal bath (3).

27. The device according to any one of claims 19 to 26, **characterized in that** the gas space (23) of the granulating tundish (2) is connected to a line for inert gas.

28. The device according to any one of claims 19 to 27, **characterized in that** a heat exchanger (18) is arranged as a cooling body in or on the wall (2') of the granulating tundish (2) .

29. The device according to any one of claims 19 to 28, **characterized in that** a heat exchanger (18) is arranged as a cooling body in the granulating tundish (2) in the volume for the metal bath (3).

30. The device according to any one of claims 19 to 29, **characterized in that** a discharge device in the form of a conveyor wheel (12) is arranged in the discharge region (14).

31. The device according to any one of claims 19 to 29, **characterized in that** a discharge device (41) in the form of a plurality of conveyor belts (43), for example made of steel belt, guided over pulleys (42) and arranged downstream of one another, is arranged in the discharge region (14), wherein the conveyor belts (43) are conducted out of the metal bath (3) in an ascending way, preferably at an angle of 30° to 50°, particularly preferably 40°, relative to the surface of the metal bath (3), wherein in each case a discharge (44) for the amorphous material (11) and/or for metal carried along from the metal bath (3) is formed at an upper pulley (42) and wherein in each case a discharge (44) of a conveyor belt (43) is arranged above a downstream conveyor belt (43) for forming a cascade of conveyor belts (43).

32. The device according to claim 31, **characterized in that** a further pulley (45) is each held, preferably resiliently held, against the conveyor belt (43) in the area of the upper pulley (42).

33. The device according to claim 31 or 32, **characterized in that** the discharge (44) of the last of the successive conveyor belts (43) is arranged above an insertion opening (47) of a cooling device (48) for the amorphous material (11), wherein the cooling device (48) can preferably be flowed through by a coolant (49), preferably in countercurrent.

## Revendications

1. Procédé de transformation de matériau en fusion (5), sous forme d'une masse fondue non métallique (5) comme du laitier, en un matériau amorphe (11), dans lequel le matériau en fusion (5) est vitrifié par refroidissement, dans lequel le matériau en fusion (5) à vitrifier est mis en contact avec un bain métallique (3) puis évacué sous forme de matériau amorphe (11) du bain métallique (3), **caractérisé en ce que** le matériau en fusion (5) est introduit dans le bain métallique (3) à travers une extrémité ouverte (4") d'un tube plongeur (4') plongé dans le bain métallique (3), et dans le bain métallique (3) est transporté hors de la zone de l'extrémité ouverte (4") du tube plongeur (4'), de préférence au moyen d'un désintégrateur mécanique (8), de préférence d'un rotor (8).

2. Procédé selon la revendication 1, **caractérisé en ce que** le matériau en fusion (5) est au moins partiellement évacuée hors de la zone de l'extrémité ouverte (4") du tube plongeur (4') au moyen d'un courant gazeux introduit dans le bain métallique (3) via une lance (39), des installations de guidage (40) pour diriger un flux étant de préférence disposées dans le bain métallique (3) au niveau de l'embouchure de la lance (39).

3. Procédé selon la revendication 2, **caractérisé en ce que** la lance (39) est guidée à l'intérieur du tube plongeur (4') et plonge dans le bain métallique (3) par le haut, ou la lance (39') est dirigée hors du bain métallique (3) vers l'extrémité ouverte (4' ') du tube plongeur (4').

4. Procédé selon la revendication 1, 2 ou 3, **caractérisé en ce que** le matériau en fusion (5) est introduit dans un bain métallique réactif (51), de préférence un bain d'étain réactif (51), en amont du bain métallique (3), dans lequel le bain métallique réactif (51) est préparé à une basicité cible de 0,85 à 1,6, de préférence de 1,3 à 1,6, en ajoutant des composants réactifs choisis dans le groupe constitué de porteurs de chaux et de porteurs SiO₂ pour ajuster la basicité (CaO/SiO₂) du matériau en fusion.

5. Procédé selon la revendication 4, **caractérisé en ce que** le bain métallique réactif est préparé en ajoutant des porteurs Al₂O₃ pour ajuster une teneur en Al₂O₃ dans le matériau en fusion de 4 % en poids à 18 % en poids.

6. Procédé selon l'une des revendications 1 à 5, **caractérisé en ce que** le matériau en fusion (5) est aspirée ou pressée dans le bain métallique (3) par l'action d'un désintégrateur mécanique (8).

7. Procédé selon l'une des revendications 1 à 6, **caractérisé en ce que** le bain métallique (3) est formé d'étain, de préférence allié à 3 % en poids d'argent et à 1 % en poids de cuivre.

8. Procédé selon l'une des revendications 1 à 7, **caractérisé en ce que** le bain métallique (3) est maintenu à une température inférieure à la température de recristallisation, notamment à une température comprise entre 300°C et 600°C.

9. Procédé selon l'une des revendications 1 à 8, **caractérisé en ce que** la chaleur introduite dans le bain métallique (3) par le matériau en fusion (5) est dissipée au moyen d'un réfrigérant (19) circulant dans un échangeur de chaleur (18).

10. Procédé selon la revendication 9, **caractérisé en ce que** le réfrigérant (19) est choisi dans le groupe constitué par l'oxygène liquide, l'air, les gaz inertes, l'huile thermique, l'eau et les liquides ioniques, notamment les solutions aqueuses de sodium, magnésium et calcium chlorure et le carbonate de potassium.

11. Procédé selon la revendication 9 ou 10, **caractérisé en ce que** la chaleur du réfrigérant (19) est récupérée sous forme d'énergie mécanique et/ou électrique, notamment dans une turbine à gaz (24) ou un échangeur de chaleur à eau sous pression avec production combinée de chaleur et d'électricité.

12. Procédé selon la revendication 9, 10 ou 11, **caractérisé en ce que** la chaleur du réfrigérant (19) est utilisée pour favoriser des réactions chimiques.

13. Procédé selon l'une des revendications 9 à 12, **caractérisé en ce que** la chaleur du réfrigérant (19) est utilisée pour la dépolymérisation des matières plastiques, notamment du polyéthylène, du polypropylène et du polyéthylène téréphtalate.

14. Procédé selon l'une des revendications 1 à 13, **caractérisé en ce que** le matériau amorphe (11) est évacué à l'aide d'un convoyeur choisi dans le groupe constitué par une bande transporteuse et une roue transporteuse (12).

15. Procédé selon l'une des revendications 1 à 14, **caractérisé en ce que** le bain métallique (3) est balayé par un gaz inerte, notamment de l'azote.

16. Procédé selon l'une des revendications 1 à 15, **caractérisé en ce que** le matériau amorphe (11) est pulvérisé après l'évacuation avec au moins un liquide choisi dans le groupe constitué par l'eau, une solution aqueuse d'acide sulfurique, une solution aqueuse de lignine sulfonate et les aromatiques sulfonés, notamment les dérivés de l'aniline, de la pyridine, du naphtalène, de l'anthracène, du phénol et/ou du crésol, notamment jusqu'à une température du matériau vitrifié comprise entre 120°C et 250°C.

17. Procédé selon la revendication 16, **caractérisé en ce que** les vapeurs formées lors de la pulvérisation sont condensées et récupérées.

18. Procédé selon l'une des revendications 1 à 17, **caractérisé en ce que** le matériau amorphe (11) est filtré et/ou centrifugé pour éliminer le métal entraîné du bain métallique.

19. Dispositif pour la mise en œuvre du procédé selon l'une des revendications 1 à 18, comprenant une cuve de coulée de granulation (2) à section de préférence annulaire ou rectangulaire pour recevoir un bain métallique (3), un tube plongeur (4') ayant une extrémité ouverte (4") dans la zone de granulation (27) de la cuve de coulée de granulation (2) prévue pour le bain métallique (3) et une zone d'évacuation (14) pour le matériau amorphe (11), **caractérisé en ce qu'**un désintégrateur mécanique (8), de préférence un rotor (8), est prévu dans la zone de l'extrémité ouverte (4") du tube plongeur (4').

20. Dispositif selon la revendication 19, **caractérisé en ce qu'**une lance (39) plongeant dans le bain métallique (3) est guidée à l'intérieur du tube plongeur (4') pour éjecter un courant gazeux, et **en ce que** des installations de guidage (40) pour diriger un flux sont de préférence prévues dans le bain métallique (3) au niveau de l'embouchure de la lance (39).

21. Dispositif selon la revendication 19, **caractérisé en ce qu'**une lance (39') est dirigée du bain métallique (3) vers l'extrémité ouverte (4") du tube plongeur (4') plongeant dans le bain métallique (3) pour éjecter un courant gazeux, et **en ce que** des installations de guidage (40') pour diriger un flux sont de préférence prévues dans le bain métallique (3) au niveau de l'embouchure de la lance (39').

22. Dispositif selon la revendication 19, 20 ou 21, **caractérisé en ce que** le tube plongeur (4') est relié à une ouverture d'évacuation d'un répartiteur de stockage (4) recevant le matériau en fusion (5) et un tube déversoir (6) est immergé dans le matériau en fusion (5) pour former un espace annulaire (6') éventuellement interrompu.

23. Dispositif selon la revendication 22, **caractérisé en ce qu'**un bain métallique réactif (51), de préférence un bain d'étain réactif (51), est maintenu dans le répartiteur de stockage (4), le bain métallique réactif (51) comportant des composants réactifs choisis dans le groupe constitué de porteurs de chaux et de porteurs SiO₂ pour ajuster la basicité (CaO/SiO₂) du matériau en fusion (5) à une basicité cible de 0,85 à 1,6, de préférence de 1,3 à 1,6.

24. Dispositif selon la revendication 23, **caractérisé en ce que** le bain métallique réactif (51) comporte des porteurs Al₂O₃ pour ajuster une teneur en Al₂O₃ dans le matériau en fusion de 4 % en poids à 18 % en poids.

25. Dispositif selon l'une des revendications 19 à 24, **caractérisé en ce que** le désintégrateur mécanique (8) est formé par une pluralité d'actionneurs (29) pouvant être entraînés en rotation et par des stators (30) issus de la paroi (2') de la cuve de coulée de granulation (2).

26. Dispositif selon la revendication 25, **caractérisé en ce que** les stators (30) et/ ou les actionneurs (29) sont agencés pour libérer un gaz inerte, de préférence de l'azote, dans le bain métallique (3).

27. Dispositif selon l'une des revendications 19 à 26, **caractérisé en ce que** l'espace gaz (23) de la cuve de coulée de granulation (2) est relié à une conduite de gaz inerte.

28. Dispositif selon l'une des revendications 19 à 27, **caractérisé en ce qu'**un échangeur de chaleur (18) est agencé comme dissipateur thermique dans ou sur la paroi (2') de la cuve de coulée de granulation (2).

29. Dispositif selon l'une des revendications 19 à 28, **caractérisé en ce qu'**un échangeur de chaleur (18) est agencé comme dissipateur thermique dans la cuve de coulée de granulation (2) dans le volume pour le bain métallique (3).

30. Dispositif selon l'une des revendications 19 à 29, **caractérisé en ce qu'**un dispositif d'évacuation est agencé dans la zone d'évacuation (14) sous la forme d'une roue de convoyage (12).

31. Dispositif selon l'une des revendications 19 à 29, **caractérisé en ce qu'**un dispositif d'évacuation (41) est agencé dans la zone d'évacuation (14) sous la forme d'une pluralité de bandes transporteuses (43) guidées sur des rouleaux de renvoi (42) et disposées les unes derrière les autres, par exemple en bande d'acier, dans lequel les bandes transporteuses (43) sont guidés hors du bain métallique (3) de manière ascendante, de préférence sous un angle de 30° à 50°, de manière particulièrement préférée de 40°, vers la surface du bain métallique (3), une chute (44) pour le matériau amorphe (11) et/ou le métal entraîné depuis le bain de métal (3) étant à chaque fois formée sur un rouleau de renvoi supérieur (42), et une chute (44) d'une bande transporteuse (43) au-dessus d'une bande transporteuse (43) en aval étant à chaque fois agencée pour former une cascade de bandes transporteuses (43)..

32. Dispositif selon la revendication 31, **caractérisé en ce que** à chaque fois, dans la zone du rouleau de renvoi supérieur (42) un autre rouleau (45) est maintenu, de préférence élastiquement, contre la bande transporteuse (43).

33. Dispositif selon la revendication 31 ou 32, **caractérisé en ce que** la chute (44) de la dernière des bandes transporteuses (43) disposées l'une derrière l'autre est disposée au-dessus d'une ouverture d'introduction (47) d'un dispositif de refroidissement (48) pour le matériau amorphe (11), le dispositif de refroidissement (48) pouvant de préférence être traversé par un réfrigérant (49), de préférence à contre-courant.
